# FASCICULE DE BREVET EUROPEEN

(11) **EP 2 994 293 B1**
(45) Date de publication et mention de la délivrance du brevet: **15.04.2020**
(21) Numéro de dépôt: 14726703.3
(22) Date de dépôt: 28.04.2014
(51) Int. Cl.: B29C 65/48, B29C 65/78, F01D 5/28, F01D 25/28, F04D 29/02, F04D 29/32, B29L 31/08, B23Q 3/06, B29C 65/18

(54) **OUTILLAGE POUR LA FIXATION D'UN RENFORT MÉTALLIQUE SUR LE BORD D'ATTAQUE D'UNE AUBE DE TURBOMACHINE ET PROCÉDÉ UTILISANT UN TEL OUTILLAGE**
EINRICHTUNG ZUM BEFESTIGEN EINER METALLVERSTÄRKUNG AN DER AUSTRITTSKANTE EINER TURBINENSCHAUFEL UND VERFAHREN ZUR VERWENDUNG SOLCH EINER EINRICHTUNG
EQUIPMENT FOR ATTACHING A METAL REINFORCEMENT ONTO THE LEADING EDGE OF A TURBINE ENGINE BLADE, AND METHOD UTILIZING SUCH EQUIPMENT

(30) Priorité: 06.05.2013 FR 1354147
(43) Date de publication de la demande: 16.03.2016
(73) Titulaire: SAFRAN, 75015 Paris (FR); Safran Aircraft Engines, 75015 Paris (FR)
(72) Inventeur: CHAUVIN, Thierry, 92820 Boutigny-sur-Essonne (FR); VARIN, Franck, Bernard, Léon, 77550 Moissy-Cramayel cedex (FR)
(74) Mandataire: Cabinet Beau de Loménie
(86) Numéro de dépôt international: PCT/FR2014/051012
(87) Numéro de publication internationale: WO 2014/181055

(56) Documents cités:
- EP-A1- 1 777 063
- US-A- 5 430 937

## Description

### Arrière-plan de l'invention

La présente invention se rapporte au domaine général des aubes de turbomachine munies d'un renfort métallique sur leur bord d'attaque. Elle vise plus particulièrement un outillage et un procédé pour la fixation d'un renfort métallique sur le bord d'attaque d'une aube de turbomachine en matériau composite.

Il est connu d'équiper les aubes de soufflante d'une turbomachine qui sont réalisées en matériau composite d'un renfort structurel métallique s'étendant sur toute la hauteur de l'aube. Un tel renfort permet de protéger l'aubage composite lors de l'impact sur la soufflante d'un corps étranger tel qu'un oiseau ingéré par la turbomachine par exemple.

Un procédé connu pour fixer le renfort métallique sur le bord d'attaque de l'aube en matériau composite est le suivant. L'aube est maintenue dans un support un repère de positionnement en envergure du bord d'attaque de l'aube est mis en place. Un film de colle est ensuite appliqué sur les surfaces du bord d'attaque de l'aube et le renfort métallique est pré-positionné manuellement sur le bord d'attaque de l'aube. La colle est alors polymérisée en autoclave.

Un tel procédé présente de nombreux inconvénients. Il s'agit notamment d'un procédé manuel qui dépend d'un opérateur, ce qui présente un risque élevé de variabilité de la santé matière du collage et de variabilité de positionnement relatif des pièces assemblées. Ces risques doivent être compensés par une gamme de contrôle très sévère. Il en résulte un coût de production élevé.

Le document US 5430937 divulgue la fabrication d'une pale de rotor d'hélicoptère en matériau composite. Le document EP 1777063 divulgue un procédé de fabrication d'une aube de turbomachine composite.

### Objet et résumé de l'invention

La présente invention a donc pour but principal de proposer un outillage et un procédé de fixation d'un bord qui ne présentent pas les inconvénients précités.

Conformément à l'invention, ce but est atteint grâce à un outillage pour la fixation d'un renfort métallique sur le bord d'attaque d'une aube de turbomachine comprenant un support d'aube destiné à recevoir une aube tout en laissant des surfaces du bord d'attaque de l'aube dégagées, et un support de renfort de bord d'attaque sur lequel est destiné à être monté le support d'aube et comprenant deux cales latérales entre lesquelles le renfort métallique du bord d'attaque de l'aube est destiné à être positionné, les cales étant aptes à pouvoir se rapprocher et s'écarter l'une de l'autre et étant munies chacune d'une grille d'aspiration destinée à assurer une préhension du renfort métallique, le support de renfort de bord d'attaque comprenant en outre des éléments chauffant destinés à permettre une polymérisation d'un film de colle appliqué sur des surfaces du bord d'attaque de l'aube lorsque celui-ci est positionné sur le renfort métallique et des épaulements formant des butées conformées pour venir en appui contre l'aube, le support d'aube ou les cales lors du rapprochement des cales.

Un tel outillage permet d'éviter les défauts de positionnements relatifs entre l'aube et le renfort métallique et d'assurer ainsi la maîtrise et la reproductibilité du positionnement du renfort métallique sur le bord d'attaque de l'aube. En particulier, l'épaisseur de colle peut être maîtrisée. La présence au niveau du support de renfort de bord d'attaque de cales pouvant s'écarter l'une de l'autre permet d'ouvrir les ailes du renfort lors de la mise en place du bord d'attaque de l'aube, ce qui facilite cette opération. Ainsi, le montage en force du renfort sur le bord d'attaque de l'aube peut être évité, ce qui garantit l'intégrité pour l'aube et pour le film de colle. De plus, la polymérisation de la colle est réalisée hors autoclave grâce aux éléments chauffant de l'outillage, ce qui permet d'augmenter la productivité et de diminuer la fatigue thermique de l'aube. En outre, la température au cours de l'ensemble du cycle de polymérisation (montée, palier, descente) peut être aisément contrôlée.

De préférence, le support d'aube comprend une demi-coquille extrados ayant une empreinte de forme complémentaire à celle d'une surface extrados de l'aube, une demi-coquille intrados ayant une empreinte de forme complémentaire à celle d'une surface intrados de l'aube, et moyens d'application d'un effort de serrage entre la demi-coquille intrados et la demi-coquille extrados.

De préférence également, le support d'aube comprend en outre des cales de bridage d'un bord de fuite de l'aube. Ce bridage complémentaire garantit le maintien en place de l'aube en cas d'épaisseur trop faible de l'aube. De plus, l'utilisation de plusieurs cales de bridage permet de garantir un contact avec l'arête du bord de fuite de l'aube en plusieurs points quelque soient les défauts de profil de celui-ci.

De préférence encore, le support de renfort de bord d'attaque comprend en outre des butées de fin course des cales. La présence de ces butées de fin de course permet de limiter la course des cales du support de renfort de bord d'attaque notamment lors de l'application de la pression sur les ailes du renfort métallique. Ainsi, il est possible de garantir la géométrie du renfort métallique et de limiter l'écrasement du film de colle (ce qui garantit le respect de l'épaisseur de colle minimale requise). De plus, il est possible d'assurer la continuité aérodynamique entre le renfort métallique et l'aube en cas d'aube légèrement trop épaisse.

Le support de renfort de bord d'attaque peut comprendre des moyens pour rapprocher ou écarter les cales l'une de l'autre.

De même, les éléments chauffant du support de renfort de bord d'attaque peuvent comprendre un circuit de circulation d'un fluide caloporteur.

L'invention a également pour objet un procédé de fixation d'un renfort métallique sur le bord d'attaque d'une aube de turbomachine au moyen d'un outillage tel que défini précédemment, le procédé comprenant une étape de positionnement et de bridage de l'aube dans le support d'aube de l'outillage en laissant les surfaces du bord d'attaque de l'aube dégagées, une étape d'application de colle sur les surfaces dégagées du bord d'attaque de l'aube, une étape de positionnement et de préhension du renfort métallique dans le support de renfort de bord d'attaque de l'outillage, une étape de positionnement du renfort métallique sur le bord d'attaque de l'aube en montant le support d'aube sur le support de renfort de bord d'attaque, une étape d'application d'une pression sur des ailes du renfort métallique, et une étape de polymérisation de la colle appliquée sur les surfaces dégagés sur le bord d'attaque de l'aube par les éléments chauffant du support de renfort de bord d'attaque de l'outillage.

Un tel procédé présente l'avantage de pouvoir être automatisé sans nécessiter d'interventions complexes d'un opérateur. De plus, il permet d'assurer la maîtrise et la reproductibilité du positionnement du renfort métallique sur le bord d'attaque de l'aube.

De préférence, l'étape de positionnement et de bridage de l'aube dans le support d'aube comprend en outre le bridage d'un bord de fuite de l'aube.

L'étape de positionnement et de préhension du renfort métallique dans le support de renfort de bord d'attaque peut comprendre successivement l'écartement l'une de l'autre des cales latérales du support de renfort de bord d'attaque, le positionnement du renfort métallique entre les cales du support de renfort de bord d'attaque, le bridage d'un bec du renfort métallique entre les cales, et l'aspiration des ailes du renfort métallique pour assurer leur préhension.

Postérieurement à l'étape de positionnement et de préhension du renfort métallique dans le support de renfort de bord d'attaque et préalablement à l'étape de positionnement du renfort métallique sur le bord d'attaque de l'aube, le procédé peut comprendre en outre une étape d'écartement l'une de l'autre des cales latérales du support de renfort de bord d'attaque pour ouvrir les ailes du renfort métallique.

Préalablement à l'étape d'écartement l'une de l'autre des cales latérales du support de renfort de bord d'attaque, des cales supplémentaires peuvent être assemblées sur le support de renfort de bord d'attaque pour limiter l'écartement desdites cales latérales.

L'aube peut être réalisée en matériau composite à fibres de carbone et le renfort métallique peut être réalisé à base de titane.

L'invention a encore pour objet une application du procédé tel que défini précédemment à la fixation d'un renfort métallique sur le bord d'attaque d'une aube de soufflante de turboréacteur.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'une aube de soufflante de turboréacteur munie d'un renfort métallique sur son bord d'attaque ;
- les figures 2 à 15 illustrent différentes étapes du procédé de fixation d'un renfort métallique sur le bord d'attaque d'une aube au moyen d'un outillage selon l'invention ;
- la figure 16 représente en vue de côté une cale latérale du support de renfort de bord d'attaque de l'outillage selon l'invention montrant sa grille d'aspiration ;
- la figure 17 est une vue en coupe du fond du support de renfort de bord d'attaque de l'outillage selon l'invention montrant ses éléments chauffant ; et
- la figure 18 est une vue en coupe longitudinale d'une cale latérale du support de renfort de bord d'attaque de l'outillage selon l'invention montrant ses éléments chauffant.

### Description détaillée de l'invention

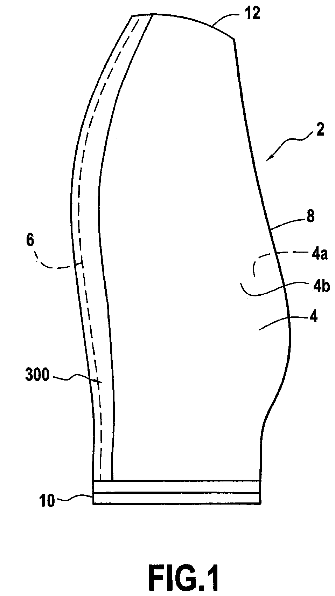

L'invention s'applique à la fixation d'un renfort métallique sur le bord d'attaque de toute aube de turbomachine. Elle trouve une application privilégiée dans la fixation d'un renfort réalisé en titane sur le bord d'attaque d'une aube de soufflante de turboréacteur réalisée en matériau composite à fibres de carbone telle que celle illustrée sur la figure 1.

De façon connue en soi, une aube 2 de soufflante de turboréacteur réalisée en matériau composite comprend une pale aérodynamique 4 ayant une surface extrados 4a et une surface intrados 4b. Les surfaces intrados et extrados s'étendent entre un bord d'attaque 6 et un bord de fuite 8. L'aube est en outre munie d'un pied 10 destiné à être monté sur un disque de rotor.

L'aube 2 en matériau composite est obtenue par drapage ou tissage d'un matériau composite. A titre d'exemple, ce matériau composite peut être un assemblage de fibres de carbone tissées et moulées par un procédé d'injection sous vide RTM (pour « Resin Transfer Molding »).

L'aube 2 comporte en outre un renfort structurel métallique 300 qui est collé sur bord d'attaque 6 en s'étendant entre le pied 10 et le sommet 12 de l'aube.

Pour fixer le renfort métallique sur le bord d'attaque 6 d'une telle aube, il est prévu, conformément à l'invention, de recourir à un outillage spécifique. Cet outillage est composé de deux éléments principaux indépendants, à savoir un support d'aube 100 et un support de renfort de bord d'attaque 200.

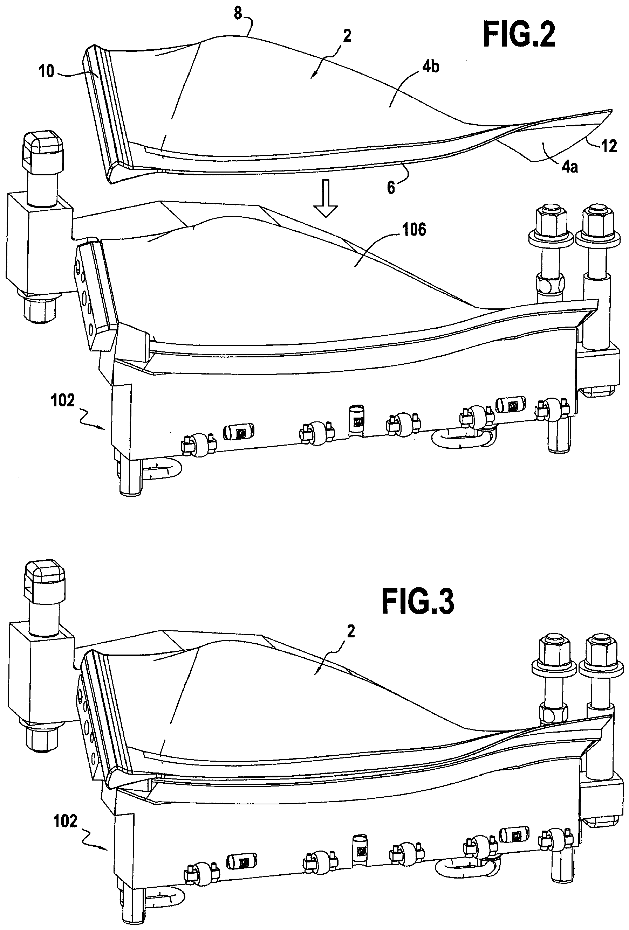

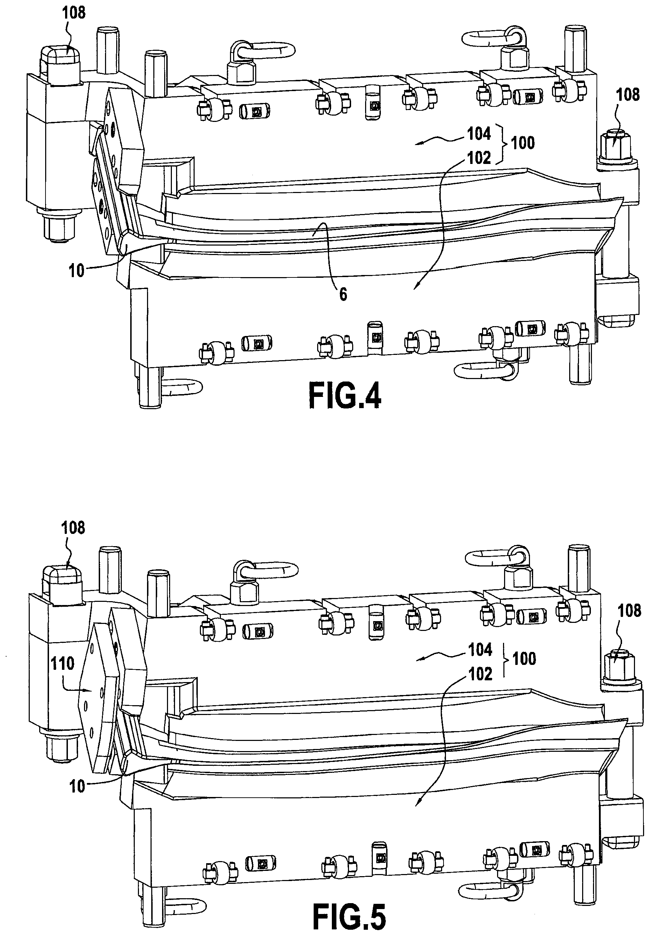

Comme représenté par la figure 2, le support d'aube 100 comprend une demi-coquille extrados 102 (figures 2 et 3) et une demi-coquille intrados 104 (visible sur les figures 4 et 5 notamment) qui sont deux éléments indépendants venant se fixer l'un sur l'autre.

La demi-coquille extrados 102 présente une empreinte 106 de forme complémentaire à celle de la surface extrados 4a de l'aube. De même, la demi-coquille intrados 104 comporte également une empreinte (non représentée sur les figures) ayant une forme complémentaire à celle de la surface intrados de l'aube.

Les demi-coquilles 102, 104 du support d'aube 100 sont configurées de sorte que, lorsque l'aube 2 est positionnée entre celles-ci comme illustré sur les figures 4 et 5, seules les surfaces intrados et extrados du bord d'attaque 6 de l'aube restent dégagées de toute emprise. L'étendue de ces surfaces correspond à la zone sur laquelle le renfort métallique doit être fixé.

Les demi-coquilles 102, 104 du support d'aube 100 peuvent être assemblées l'une sur l'autre par exemple par l'intermédiaire de systèmes de type vis/écrous 108 dont le serrage permet d'assurer un bridage de l'aube 2 positionnée entre les demi-coquilles.

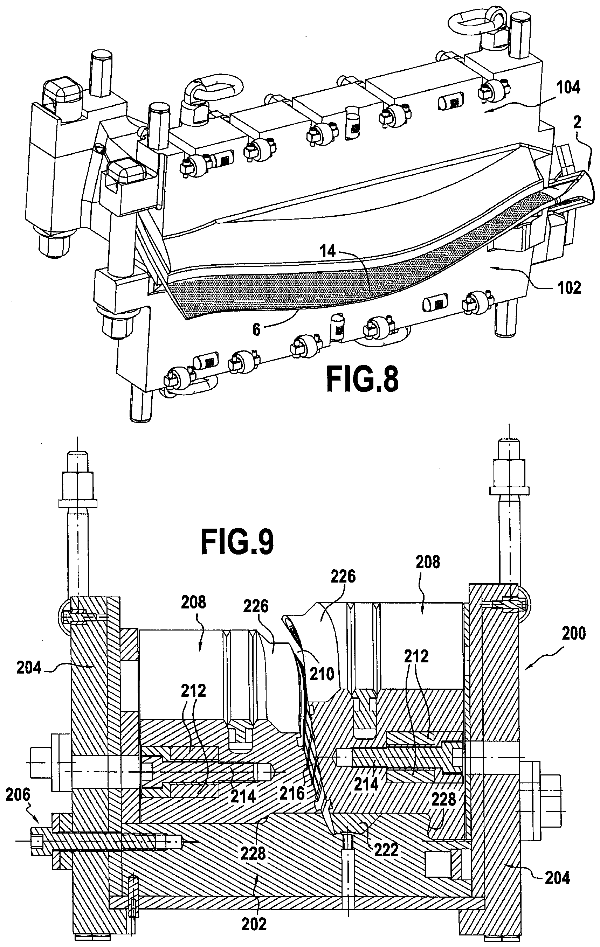

Comme représenté sur les figures 9 à 14, le support de renfort de bord d'attaque 200 de l'outillage comprend une base 202 formant fond, deux parois latérales 204 fixées sur le fond 202 par exemple par l'intermédiaire de vis 206, et deux cales latérales 208 positionnées à l'intérieur de l'espace délimité par le fond 202 et les parois latérales 204.

De façon plus précise, les deux cales latérales 208 sont espacées latéralement l'une de l'autre par un espace 210 dont la géométrie générale correspond sensiblement au profil du renfort métallique du bord d'attaque de l'aube à utiliser.

De plus, les deux cales latérales 208 sont aptes à pouvoir se rapprocher et s'écarter latéralement l'une de l'autre. Dans l'exemple illustré sur la figure 9, le déplacement latéral des cales 208 est réalisé au moyen de ressorts 212 exerçant une poussée sur chaque cale latérale pour la rapprocher de l'autre cale latérale, ces ressorts étant maintenus en position rétractée par des vis de maintien 214 pour l'ensemble des phases d'utilisation hors de celle de mise en pression. Ces ressorts 212 sont tarés et positionnés en fonction du niveau choisi de pression appliquée sur le renfort métallique positionné entre les cales.

Bien entendu, d'autres moyens pour permettre aux cales latérales de se rapprocher et s'écarter l'une de l'autre peuvent être envisagés. On pourra par exemple utiliser des vessies gonflables ou des vérins hydrauliques venant exercer une pression latérale sur ces cales pour les déplacer.

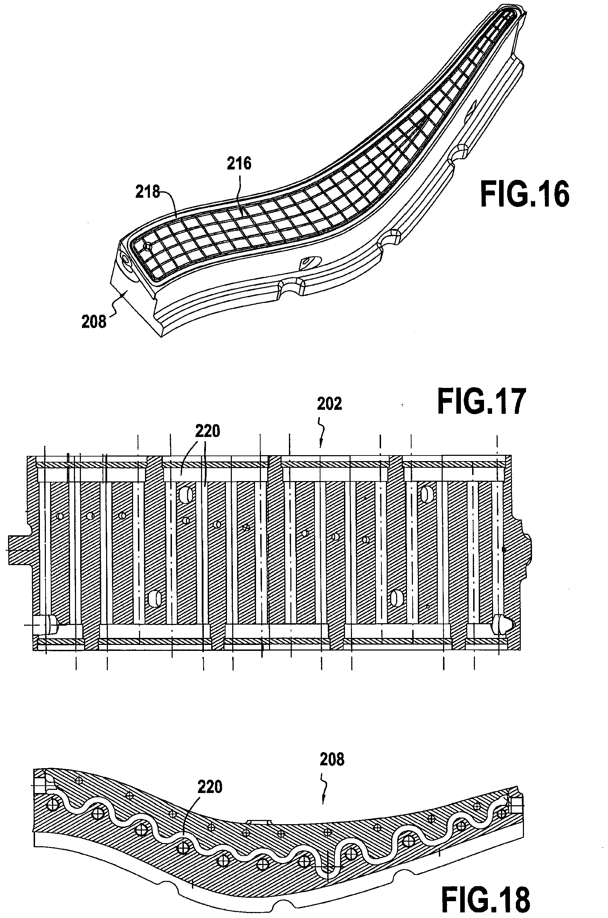

Les cales latérales 208 sont également munies chacune d'une grille (ou réseau) d'aspiration 216 qui est positionnée au niveau de leur face latérale délimitant l'espace 210 de réception du renfort métallique. Ces grilles d'aspiration 216 sont chacune reliées à un circuit d'aspiration (non représenté) débouchant à l'extérieur de l'outillage. Come représenté sur la figure 16 qui montre une cale latérale 208 de côté, un joint périphérique 218 peut être positionné autour de la grille d'aspiration 216.

Par ailleurs, le support de renfort de bord d'attaque 200 comprend encore des éléments chauffant 220 destinés à permettre une polymérisation d'un film de colle appliqué sur le bord d'attaque de l'aube lorsque celui-ci est positionné dans le renfort métallique.

Plus précisément, comme représenté sur les figures 17 et 18, ces éléments chauffant 220 sont disposés à l'intérieur du fond 202 du support de renfort de bord d'attaque (figure 17 qui montre le fond en vue de coupe) et au sein de chaque cale latérale 208 (figure 18 qui est une vue en coupe longitudinale d'une cale latérale). Dans l'exemple représenté sur ces figures, ces éléments chauffant se présentent sous la forme d'un circuit de circulation d'un fluide caloporteur 220. Bien entendu, il est possible d'envisager d'autres types éléments chauffant, par exemple un circuit électrique résistif ou un circuit de chauffage par induction.

Le support de renfort de bord d'attaque 200 comprend encore une bride de bec du renfort métallique 222 qui est interposée entre le fond 202 et l'une des cales latérales 208. Cette bride 222 a pour fonction d'assurer un bridage en références d'un bec du renfort métallique lorsque celui-ci est positionné dans le support de renfort de bord d'attaque.

Le procédé de fixation d'un renfort métallique sur le bord d'attaque d'une aube au moyen de l'outillage précédemment décrit découle de ce qui précède.

Au cours d'une première étape de ce procédé de fixation, l'aube 2 est positionnée sur la demi-coquille extrados 102 du support d'aube 100 en plaçant la face extrados 4a de celle-ci sur l'empreinte 106 de cette demi-coquille extrados (figures 2 et 3).

L'étape suivante consiste à monter la demi-coquille intrados 104 sur l'aube en positionnant l'empreinte de cette demi-coquille sur la surface intrados 4b de l'aube (figure 4).

Une cale de serrage 110 du pied de l'aube est ensuite mise en place contre le pied 10 de l'aube (figure 5) et le bridage de l'aube dans le support d'aube 100 est assuré par serrage des systèmes de type vis/écrous 108. Cet effort de serrage est maîtrisé par l'utilisation d'une clé dynamométrique.

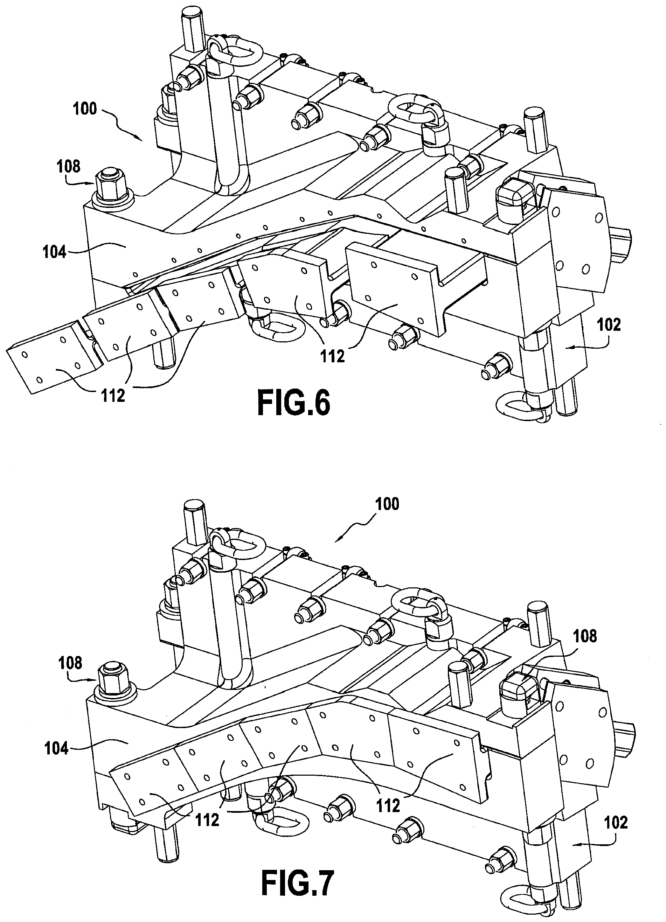

L'étape suivante du procédé consiste à réaliser un bridage du bord de fuite 8 de l'aube. A cet effet, le support d'aube 100 comprend plusieurs cales de bridage du bord de fuite 112 qui viennent s'insérer entre le bord de fuite de l'aube et la demi-coquille intrados 104 (figures 6 et 7).

Le bridage du bord de fuite de l'aube garantit le maintien en place de l'aube dans le support d'aube en cas d'épaisseur trop faible de celle-ci. De plus, l'utilisation de plusieurs cales de bridage du bord de fuite 112 permet de garantir un contact avec l'arête du bord de fuite de l'aube en plusieurs points quelque soient les défauts de profil de celui-ci.

Ainsi, l'aube 2 est positionnée et parfaitement bridée dans le support d'aube 100 de l'outillage tout en laissant les surfaces du bord d'attaque de l'aube totalement dégagées.

Au cours de l'étape suivante, le renfort métallique 300 destiné à venir se fixer sur le bord d'attaque 6 de l'aube est positionné dans le support de renfort de bord d'attaque 200 de l'outillage.

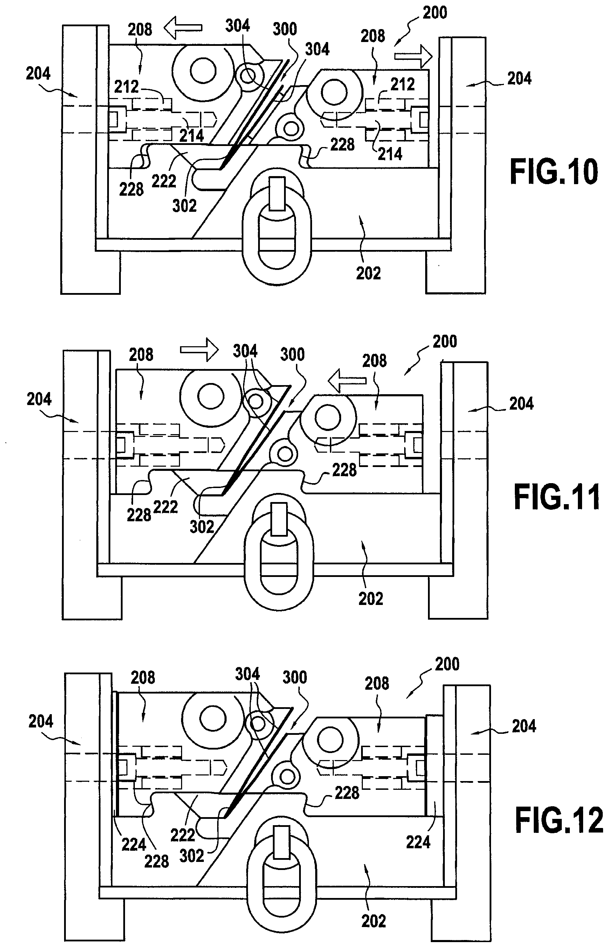

A cet effet, comme représenté sur la figure 10, les cales latérales 208 du support de renfort de bord d'attaque sont écartées l'une de l'autre (ici de façon manuelle) pour permettre le positionnement du renfort métallique 300 entre celles-ci dans l'espace 210. La bride de bec du renfort métallique 222 permet à ce stade d'assurer un bridage en références d'un bec 302 du renfort métallique 300 entre les cales.

Une fois le renfort métallique positionné sur le support de renfort de bord d'attaque, les cales 208 sont rapprochées manuellement l'une de l'autre pour que leurs faces latérales respectives viennent en contact avec les ailes 304 (ou faces latérales) du renfort métallique et les grilles d'aspiration de ces cales sont mises en fonctionnement pour assurer une préhension par aspiration des ailes 304 du renfort métallique (figure 11).

Des cales supplémentaires 224 sont ensuite disposées sur le support de renfort de bord d'attaque entre les parois latérales 204 et les cales 208 (figure 12). Ces cales supplémentaires permettent de limiter l'écartement desdites cales 208 du support de renfort de bord d'attaque au cours de l'étape suivante d'ouverture des ailes du renfort métallique et de maîtriser la course des ressorts 212 de mise en pression et donc l'effort qu'ils génèrent.

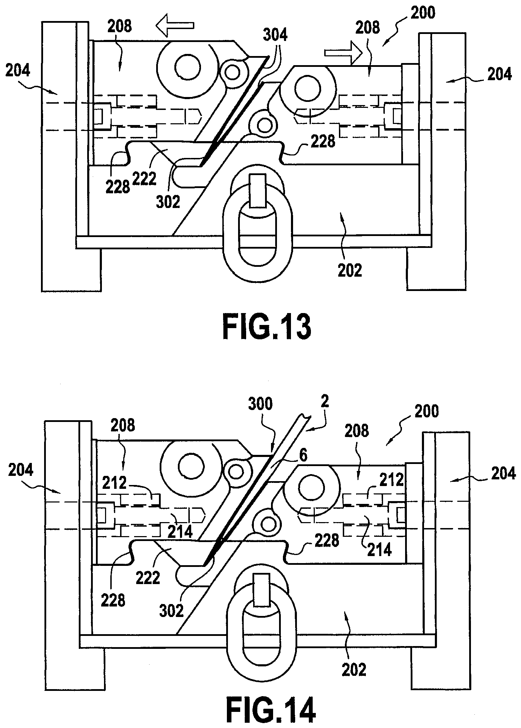

Les ailes 304 du renfort métallique 300 étant maintenues en contact avec les faces latérales des cales 208 par aspiration, l'écartement des cales 208 l'une de l'autre au cours de l'étape suivante entraîne une ouverture desdites ailes 304 du renfort métallique pour permettre l'insertion du bord d'attaque de l'aube (figures 13 et 14). Pour vaincre la résistance des ailes du renfort métallique, cet écartement est réalisé au moyen de vis d'ouverture de cales (non représentées sur les figures) qui sont accessibles depuis les parois latérales 204 du support de renfort de bord d'attaque.

Préalablement au positionnement du bord d'attaque 6 de l'aube 2 entre les ailes 304 du renfort métallique 300, il est nécessaire d'appliquer de la colle 14 sur les surfaces du bord d'attaque de l'aube qui ne sont pas en prises avec le support d'aube (voir la figure 8). A cet effet, une colle en film peut être appliquée sur le bord d'attaque de l'aube. Alternativement, une colle en pâte peut être appliquée en fond de cavité du renfort métallique, la cinématique de l'outillage lors de l'assemblage permettant un fluage de la colle sur l'ensemble des surfaces du bord d'attaque à coller. Encore alternativement, une colle liquide peut être injectée une fois le renfort métallique mis en place sur le bord d'attaque de l'aube.

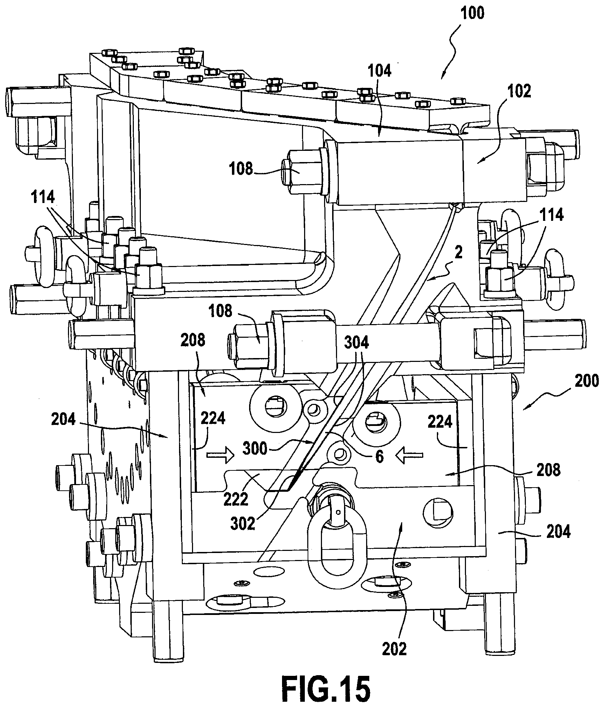

Ensuite, le positionnement du bord d'attaque 6 de l'aube 2 entre les ailes 304 du renfort métallique 300 est obtenu en montant le support d'aube 100 sur le support de renfort de bord d'attaque 200 (figure 15). Compte tenu du vrillage du bord d'attaque de l'aube, cet assemblage nécessite un mouvement combiné de translation et de rotation.

Des vis de serrage 114 permettent alors un bridage entre le support d'aube 100 et le support de renfort de bord d'attaque 200, ainsi qu'une mise en pression sous le bec 302 du renfort métallique 300. De la sorte, le film de colle est compacté en sommet du renfort métallique jusqu'à la cote finale.

Ensuite, l'étape suivante consiste à rapprocher à nouveau l'une de l'autre les cales 208 du support de renfort de bord d'attaque (par dévissage des vis d'ouvertures de cales puis dévissage des vis 214 de maintien des ressorts 212) pour assurer une mise en pression des ailes 304 du renfort métallique. Cette mise en pression peut être ajustée en fonction des besoins par le nombre de ressorts 212, leur raideur et le niveau de compression choisie.

Par ailleurs, la présence au niveau du support de renfort de bord d'attaque de butées de fin course des cales latérales de celui-ci permet de garantir une épaisseur du film de colle. Plus précisément, comme représenté notamment sur la figure 9, chaque cale 208 présente un épaulement 226 formant butée de fin de course qui vient en appui contre l'aube ou le support d'aube lors du rapprochement des cales 208. De plus, le fond 202 du support de renfort de bord d'attaque comprend également deux épaulements 228 formant butée de fin de course contre lesquels viennent en appui les cales 208 lors de leur rapprochement.

Au cours de cette étape d'application d'une pression sur des ailes du renfort métallique, la préhension de ces ailes par aspiration est maintenue pour garantir le positionnement du renfort métallique en cas de défaut de fermeture des ailes de celui-ci.

Les éléments chauffant 220 du support de renfort de bord d'attaque 200 sont mis en fonctionnement (avant ou après l'étape de mise en pression des ailes du renfort métallique) pour déclencher un cycle de polymérisation du film de colle (montée, palier, et descente de température).

Une fois la colle polymérisée et l'ensemble refroidi, l'aube dont le bord d'attaque est revêtu du renfort métallique peut être libérée de l'outillage. A cet effet, les cales du support de renfort de bord d'attaque sont à nouveau écartées l'une de l'autre, la bride de bec est libérée et le support d'aube est démontée du support de renfort de bord d'attaque. Enfin, l'aube est libérée du support d'aube en désassemblant les deux demi-coquilles de celui-ci.

## Revendications

1. Outillage pour la fixation d'un renfort métallique (300) sur le bord d'attaque (6) d'une aube (2) de turbomachine comprenant :
un support d'aube (100) destiné à recevoir une aube tout en laissant des surfaces du bord d'attaque de l'aube dégagées ; et
un support de renfort de bord d'attaque (200) sur lequel est destiné à être monté le support d'aube et comprenant deux cales latérales (208) entre lesquelles le renfort métallique du bord d'attaque de l'aube est destiné à être positionné, les cales étant aptes à pouvoir se rapprocher et s'écarter l'une de l'autre et étant munies chacune d'une grille d'aspiration (216) destinée à assurer une préhension du renfort métallique, le support de renfort de bord d'attaque comprenant en outre des éléments chauffant (220) destinés à permettre une polymérisation d'un film de colle (14) appliqué sur des surfaces du bord d'attaque de l'aube lorsque celui-ci est positionné sur le renfort métallique et des épaulements formant des butées (226, 228) conformés pour venir en appui contre l'aube, le support d'aube ou les cales lors du rapprochement des cales (208)_{.}

2. Outillage selon la revendication 1, dans lequel le support d'aube (100) comprend une demi-coquille extrados (102) ayant une empreinte (106) de forme complémentaire à celle d'une surface extrados de l'aube, une demi-coquille intrados (104) ayant une empreinte de forme complémentaire à celle d'une surface intrados de l'aube, et moyens (108) d'application d'un effort de serrage entre la demi-coquille intrados et la demi-coquille extrados.

3. Outillage selon l'une des revendications 1 et 2, dans lequel le support d'aube comprend en outre des cales (112) de bridage d'un bord de fuite (8) de l'aube (2).

4. Outillage selon l'une quelconque des revendications 1 à 3, dans lequel le support de renfort de bord d'attaque (200) comprend des moyens pour rapprocher ou écarter les cales l'une de l'autre.

5. Outillage selon l'une quelconque des revendications 1 à 4, dans lequel les éléments chauffant du support de renfort de bord d'attaque (200) comprennent un circuit de circulation d'un fluide caloporteur (220).

6. Procédé de fixation d'un renfort métallique sur le bord d'attaque d'une aube de turbomachine au moyen d'un outillage selon l'une quelconque des revendications 1 à 5, comprenant :
une étape de positionnement et de bridage de l'aube (2) dans le support d'aube (100) de l'outillage en laissant les surfaces du bord d'attaque (6) de l'aube dégagées ;
une étape d'application de colle (14) sur les surfaces dégagées du bord d'attaque de l'aube ;
une étape de positionnement et de préhension du renfort métallique (300) dans le support de renfort de bord d'attaque (200) de l'outillage ;
une étape de positionnement du renfort métallique sur le bord d'attaque de l'aube en montant le support d'aube sur le support de renfort de bord d'attaque ;
une étape d'application d'une pression sur des ailes (304) du renfort métallique ; et
une étape de polymérisation de la colle appliquée sur les surfaces dégagés sur le bord d'attaque de l'aube par les éléments chauffant (220) du support de renfort de bord d'attaque de l'outillage.

7. Procédé selon la revendication 6, dans lequel l'étape de positionnement et de bridage de l'aube dans le support d'aube comprend en outre le bridage d'un bord de fuite (8) de l'aube (2).

8. Procédé selon l'une des revendications 6 et 7, dans lequel l'étape de positionnement et de préhension du renfort métallique dans le support de renfort de bord d'attaque comprend successivement l'écartement l'une de l'autre des cales latérales (208) du support de renfort de bord d'attaque, le positionnement du renfort métallique entre les cales du support de renfort de bord d'attaque, le bridage d'un bec (302) du renfort métallique entre les cales, et l'aspiration des ailes (304) du renfort métallique pour assurer leur préhension.

9. Procédé selon l'une quelconque des revendications 6 à 8, comprenant en outre, postérieurement à l'étape de positionnement et de préhension du renfort métallique dans le support de renfort de bord d'attaque et préalablement à l'étape de positionnement du renfort métallique sur le bord d'attaque de l'aube, une étape d'écartement l'une de l'autre des cales latérales du support de renfort de bord d'attaque pour ouvrir les ailes du renfort métallique.

10. Procédé selon la revendication 9, dans lequel, préalablement à l'étape d'écartement l'une de l'autre des cales latérales (208) du support de renfort de bord d'attaque, des cales supplémentaires (224) sont assemblées sur le support de renfort de bord d'attaque pour limiter l'écartement desdites cales latérales.

11. Procédé selon l'une quelconque des revendications 6 à 10, dans lequel l'aube (2) est réalisée en matériau composite à fibres de carbone et le renfort métallique (300) est réalisé à base de titane.

12. Application du procédé selon l'une quelconque des revendications 6 à 11 à la fixation d'un renfort métallique sur le bord d'attaque d'une aube de soufflante de turboréacteur.

## Patentansprüche

1. Werkzeug zum Befestigen einer Metallverstärkung (300) an der Vorderkante (6) einer Schaufel (2) einer Turbomaschine, umfassend:
einen Schaufelhalter (100), der dazu bestimmt ist, eine Schaufel aufzunehmen, und gleichzeitig Oberflächen der Vorderkante der Schaufel frei lässt, und
einen Vorderkantenverstärkungshalter (200), an dem der Schaufelhalter angebracht werden soll und der zwei Seitenkeile (208) umfasst, zwischen denen die Metallverstärkung der Vorderkante der Schaufel positioniert werden soll, wobei die Keile geeignet sind, sich einander zu nähern und voneinander zu entfernen, und jeweils mit einem Sauggitter (216) versehen sind, das dazu bestimmt ist, ein Greifen der Metallverstärkung sicherzustellen, wobei der Vorderkantenverstärkungshalter ferner Heizelemente (220), welche dazu bestimmt sind, eine Polymerisation eines Klebstofffilms (14) zu ermöglichen, der auf Oberflächen der Vorderkante der Schaufel aufgebracht wird, wenn diese auf der Metallverstärkung positioniert wird, sowie Schultern umfasst, die Anschläge (226, 228) bilden, welche so geformt sind, dass sie an der Schaufel, dem Schaufelhalter oder den Keilen zur Anlage kommen, wenn die Keile (208) einander genähert werden.

2. Werkzeug nach Anspruch 1, bei dem der Schaufelhalter (100) eine rückseitige Halbschale (102), welche eine Vertiefung (106) mit einer zu der Form einer rückseitigen Fläche der Schaufel komplementären Form aufweist, eine vorderseitige Halbschale (104), welche eine Vertiefung mit einer zu der Form einer vorderseitigen Fläche der Schaufel komplementären Form aufweist, sowie Mittel (108) zum Aufbringen einer Klemmkraft zwischen der vorderseitigen Halbschale und der rückseitigen Halbschale umfasst.

3. Werkzeug nach einem der Ansprüche 1 und 2, bei dem der Schaufelhalter ferner Keile (112) zum Einspannen einer Hinterkante (8) der Schaufel (2) umfasst.

4. Werkzeug nach einem der Ansprüche 1 bis 3, bei dem der Vorderkantenverstärkungshalter (200) Mittel umfasst, um die Keile einander zu nähern oder voneinander zu entfernen.

5. Werkzeug nach einem der Ansprüche 1 bis 4, bei dem die Heizelemente des Vorderkantenverstärkungshalters (200) einen Zirkulationskreislauf eines Wärmeübertragungsfluids (220) umfassen.

6. Verfahren zum Befestigen einer Metallverstärkung an der Vorderkante einer Schaufel einer Turbomaschine mittels eines Werkzeugs nach einem der Ansprüche 1 bis 5, umfassend:
einen Schritt des Positionierens und Einspannens der Schaufel (2) in dem bzw. den Schaufelhalter (100) des Werkzeugs unter Freilassen der Oberflächen der Vorderkante (6) der Schaufel,
einen Schritt des Aufbringens von Klebstoff (14) auf die freien Oberflächen der Vorderkante der Schaufel;
einen Schritt des Positionierens und Greifens der Metallverstärkung (300) in dem Vorderkantenverstärkungshalter (200) des Werkzeugs,
einen Schritt des Positionierens der Metallverstärkung an der Vorderkante der Schaufel durch Anbringen des Schaufelhalters an dem Vorderkantenverstärkungshalter,
einen Schritt des Aufbringens eines Drucks auf die Flügel (304) der Metallverstärkung, und
einen Schritt des Polymerisierens des auf die freien Oberflächen an der Vorderkante der Schaufel aufgebrachten Klebstoffs durch die Heizelemente (220) des Vorderkantenverstärkungshalters des Werkzeugs.

7. Verfahren nach Anspruch 6, bei dem der Schritt des Positionierens und Einspannens der Schaufel in dem bzw. den Schaufelhalter ferner das Einspannen einer Hinterkante (8) der Schaufel (2) umfasst.

8. Verfahren nach einem der Ansprüche 6 und 7, bei dem der Schritt des Positionierens und Greifens der Metallverstärkung in dem Vorderkantenverstärkungshalter nacheinander das Entfernen der Seitenkeile (208) des Vorderkantenverstärkungshalters voneinander, das Positionieren der Metallverstärkung zwischen den Keilen des Vorderkantenverstärkungshalters, das Einspannen einer Spitze (302) der Metallverstärkung zwischen den Keilen sowie das Ansaugen der Flügel (304) der Metallverstärkung, um deren Greifen sicherzustellen, umfasst.

9. Verfahren nach einem der Ansprüche 6 bis 8, das ferner nach dem Schritt des Positionierens und Greifens der Metallverstärkung in dem Vorderkantenverstärkungshalter und vor dem Schritt des Positionierens der Metallverstärkung an der Vorderkante der Schaufel einen Schritt des Entfernens der Seitenkeile des Vorderkantenverstärkungshalters voneinander umfasst, um die Flügel der Metallverstärkung zu öffnen.

10. Verfahren nach Anspruch 9, bei dem vor dem Schritt des Entfernens der Seitenkeile (208) des Vorderkantenverstärkungshalters voneinander zusätzliche Keile (224) an den Vorderkantenverstärkungshalter montiert werden, um das Entfernen der Seitenkeile zu begrenzen.

11. Verfahren nach einem der Ansprüche 6 bis 10, bei dem die Schaufel (2) aus Kohlenstofffaser-Verbundwerkstoff gefertigt ist und die Metallverstärkung (300) auf der Basis von Titan gefertigt ist.

12. Anwendung des Verfahrens nach einem der Ansprüche 6 bis 11 auf das Befestigen einer Metallverstärkung an der Vorderkante einer Gebläseschaufel eines Turbostrahltriebwerks.

## Claims

1. Tooling for fastening metal reinforcement (300) on the leading edge (6) of a turbine engine blade (2), the tooling comprising:
a blade support (100) for receiving a blade while leaving surfaces of the leading edge of the blade disengaged; and
a leading edge reinforcement support (200) on which the blade support is designed to be mounted, and comprising two lateral wedges (208) between which the metal reinforcement for the leading edge of the blade is to be positioned, the wedges being suitable for being capable of moving towards each other and apart from each other and each of them being provided with a suction grid (216) for gripping the metal reinforcement, the leading edge reinforcement support further including heater elements (220) for polymerizing an adhesive film (14) applied on the leading edge surfaces of the blade when it is in position against the metal reinforcement and shoulders forming end-of-stroke abutments (226, 228) shaped for coming to bear against one of the blade, the blade support and the wedges, as the wedges move toward one another (208).

2. Tooling according to claim 1, wherein the blade support (100) comprises a suction side half-shell (102) having a recess (106) of shape complementary to the shape of a suction side surface of the blade, a pressure side half-shell (104) having a recess of shape complementary to the shape of the pressure side surface of the blade, and means (108) for applying a tightening force between the pressure side half-shell and the suction side half-shell.

3. Tooling according to claim 1 or claim 2, wherein the blade support further includes wedges (112) for clamping a leading edge (8) of the blade (2).

4. Tooling according to any one of claims 1 to 3, wherein the leading edge reinforcement support (200) includes means for moving the wedges towards each other or apart from each other.

5. Tooling according to any one of claims 1 to 4, wherein the heater elements of the leading edge reinforcement support (200) include a circuit for circulating a heat-transfer fluid (220).

6. A method of fastening metal reinforcement on the leading edge of a turbine engine blade by using tooling according to any one of claims 1 to 5, the method comprising:
a step of positioning and clamping the blade (2) in the blade support (100) of the tooling while leaving the surfaces of the leading edge (6) of the blade disengaged;
a step of applying adhesive (14) to the disengaged surfaces of the leading edge of the blade;
a step of positioning and gripping the metal reinforcement (300) in the leading edge reinforcement support (200) of the tooling;
a step of positioning the metal reinforcement on the leading edge of the blade by mounting the blade support on the leading edge reinforcement support;
a step of applying pressure against the flanges (304) of the metal reinforcement; and
a step of polymerizing the adhesive applied to the disengaged surfaces of the leading edge of the blade by means of the heater elements (220) of the leading edge reinforcement support of the tooling.

7. A method according to claim 6, wherein the step of positioning and clamping the blade in the blade support further comprises clamping a trailing edge (8) of the blade (2).

8. A method according to claim 6 or claim 7, wherein the step of positioning and gripping the metal reinforcement in the leading edge reinforcement support comprises successively placing the lateral wedges (208) of the leading edge reinforcement support apart from each other, positioning the metal reinforcement between the wedges of the leading edge reinforcement support, clamping a leading edge (302) of the metal reinforcement between the wedges, and applying suction to the flanges (304) of the metal reinforcement in order to grip them.

9. A method according to any one of claims 6 to 8, further including, after the step of positioning and gripping the metal reinforcement in the leading edge reinforcement support and prior to the step of positioning the metal reinforcement on the leading edge of the blade, a step of spacing the lateral wedges of the leading edge reinforcement support apart from each other in order to open the flanges of the metal reinforcement.

10. A method according to claim 9, wherein, prior to the step of moving the lateral wedges (208) of the leading edge reinforcement support apart from each other, additional wedges (224) are assembled on the leading edge reinforcement support in order to limit the spacing apart of said lateral wedges.

11. A method according to any one of claims 6 to 10, wherein the blade (2) is made of carbon fiber composite material and the metal reinforcement (300) is based on titanium.

12. The application of the method according to any one of claims 6 to 11 to fastening metal reinforcement on the leading edge of a turbojet fan blade.
